# EUROPEAN PATENT SPECIFICATION

(11) **EP 4 112 832 B1**
(45) Date of publication and mention of the grant of the patent: **22.01.2025**
(21) Application number: 22181169.8
(22) Date of filing: 27.06.2022
(51) Int. Cl.: E04B 1/58, F16B 7/04, E03D 11/14, E03C 1/326, E04B 2/76

(54) **SUPPORT FOOT FOR CONNECTING THE MOUNTING FRAME OF A SANITARY DEVICE TO A BUILDING PROFILE OF A CONSTRUCTION SYSTEM FOR DRY CONSTRUCTION**
STÜTZFUSS ZUR VERBINDUNG DES MONTAGERAHMENS EINER SANITÄREINRICHTUNG MIT EINEM BAUPROFIL EINES BAUSYSTEMS FÜR DEN TROCKENBAU
PIED DE SUPPORT POUR RELIER LE CADRE DE MONTAGE D'UN DISPOSITIF SANITAIRE À UN PROFILÉ DE CONSTRUCTION D'UN SYSTÈME DE CONSTRUCTION À SEC

(30) Priority: 28.06.2021 CZ 20210317
(43) Date of publication of application: 04.01.2023
(73) Proprietor: Alcadrain s.r.o., 170 00 Praha 7, Holesovice (CZ)
(72) Inventor: Fabicovic, Frantisek, 691 42 Valtice (CZ)
(74) Representative: Musil, Dobroslav

(56) References cited:
- EP-A1- 1 837 446
- BE-A3- 1 015 540

## Description

### Technical field

The invention relates to a support foot for connecting the mounting frame of a sanitary device to a construction profile of a construction system for dry building, wherein the support foot comprises a longitudinal base which is on its upper side provided with a sliding element for sliding on the end of a beam of the mounting frame of the sanitary device to be connected, the longitudinal base being provided on its lower side with a longitudinal groove for attaching the support foot to a dovetail-shaped side of a construction profile, the longitudinal groove being provided with a pair of opposing side walls, wherein on the base, a locking lever is mounted at its one end rotatably about an axis, the axis of rotation of the locking lever being parallel to the longitudinal axis of the longitudinal base and at the same time the axis of rotation of the locking lever is transverse to the longitudinal axis of the locking lever, the locking lever is on its lower side provided with a locking tooth with a locking wall, the locking lever being rotatable between its unlocked position and its locked position, wherein the locking tooth is in the locked position of the locking lever situated at the level of the side walls of the longitudinal groove in the base.

### Background art

Numerous methods for joining construction profiles are known from patent and other literature, including profiles for dry construction systems. The disadvantage of many of them is the relatively complicated assembly and the low flexibility when it comes to connecting vertical profiles of rectangular cross-section to the horizontal system profile, which constitutes the basis of the wall structure for dry construction.

For example, in the solutions according to US 3982841, EP 0864764, US 8562240, EP 0675292 and FR 2721377, a common disadvantage is the necessity of inserting the connecting part into the cavity of the construction profile, which limits the use of the connecting element only to the corner part of the structure.

US 4641983, US 5816734, DE 202004017856, US 8403588 or US 8562240 disclose solutions, wherein the mechanism comprises a coil spring inside, which increases complexity, complicates the assembly and incurs additional costs.

From practice, a support foot is known for connecting the mounting frame of a sanitary appliance to the one-sided open construction profile of the construction system for dry construction, which comprises a base which is provided on its upper side with shaped projections for sliding the part of the mounting frame to be connected, usually for sliding on a hollow vertical beam of the mounting frame, wherein the support foot is used to fix the lower end of the mounting frame to the construction profile of the construction system for dry construction. On its lower side, the base is provided with a pair of parallel longitudinal grooves spaced apart at a distance of longitudinal ribs on the open side of the construction profile. A locking lever is rotatably mounted on the base about longitudinal axis which is parallel to the direction of the longitudinal grooves. On its lower side, the locking lever is provided with a pair of spreader noses which, in the locked position of the locking lever, extend through through-holes in the upper side of the base into the open side of the one-sided open construction profile between the longitudinal ribs on the open side of the construction profile, wherein these spreader noses abut on mutually adjacent inner sides of the longitudinal ribs on the open side of the construction profile and push these ribs apart, wherein these ribs simultaneously press with their outer surfaces against the outer side surfaces of the parallel longitudinal grooves in the base of the support foot. Thus, the base is fixed to the appropriate location on the construction profile. Optionally, the outer side surfaces of the parallel longitudinal grooves in the base of the support foot are inclined to reduce the risk of the support foot being pulled out of the profile. Optionally, at its outer end, the locking lever is provided with a latch for a tooth formed on the outer side of the base. As a result, the locking lever is secured against unintentional release from the locked position.

The disadvantage of this embodiment is especially the fact that the applicability is limited only to a construction system for dry construction using a single-sided open construction profile. A further disadvantage is the need for a considerable actuating force to lock the locking lever into the construction profile, but also to unlock the locking lever from the construction profile. In this case, the construction profile has a substantially square cross-section with the corners pressed in rounded shape towards the centre of the profile, one side of the profile being open and forming a through gap between the pair of longitudinal ribs on the open side of the construction profile.

Furthermore, a support foot is known for connecting the mounting frame of a sanitary appliance to a closed construction profile of a construction system for dry construction, which comprises a base which is provided on its upper side with shaped projections for sliding on the part of the mounting frame to be connected, usually for sliding a hollow vertical beam of the mounting frame, wherein the support foot serves to fix the lower end of the mounting frame to the construction profile of the construction system for dry construction. The base is provided on its lower side with a dovetail groove which opens towards the upper side of the base and which is designed to be fitted to the side of the closed construction profile. The construction profile has a substantially square cross-section with the corners rounded and pressed towards the centre of the profile, so that the sides of the profile essentially form a dovetail projection which widens in the direction from the centre of the profile towards the outer edge of the profile. In one side wall of the dovetail groove in the base, an eccentric locking lever is rotatably mounted about an axis which is perpendicular to the longitudinal direction of the base and at the same time is parallel to the direction of the shaped projections for sliding on the part of the mounting frame to be connected. The eccentric locking lever is by the active surface of its eccenter adapted to abut the inclined side wall of the dovetail projection on the side of the construction profile, so that by turning the eccentric locking lever to the locked position, this eccenter presses the opposite inclined wall of the dovetail groove against the opposite inclined side wall of the dovetail projection on the side of the construction profile and thus the support foot is fixed in the required position at the appropriate location of the construction profile.

The disadvantage of this solution is the limited clamping force as well as the distribution of these forces in the longitudinal direction of the support foot.

US 2015316086 A1 discloses a coupling for connecting load-bearing profiles, which is, however, not suitable for mutual connection of profiles by the front of one profile to the side of the other profile.

BE 1 015 540 A3 discloses a clamp for a curtain rail, which has an elongated plate 5, which is terminated at one end by a hook 6, which is situated transversely to the length of the elongated plate 5 and is arranged at the lower side of the elongated plate 5. At the other end of the lower side of the elongated plate 5, a shifting clamping element 3 is arranged in a spring-loaded manner in the direction of the length of the elongated plate 5. The claimping element 3 is slidably situated between the side walls 9 and 10 of the elongated plate 5 situated in the longitudinal direction of the elongated plate 5. The clamping element 3 has on its front end a shaped front face 8 which is transversal to the longitudinal direction of the elongated plate 5 and which is arranged against the transversal hook 6 at the first end of the elongated plate 5. The clamping element 3 has on its back end elastic elements 15, 16 which elastically push the clamping element 3 with its front face 8 towards the hook 6. Between the front face 8 and the hook 6, a shaped gap d is therefore formed for a curtain track 4.

The object of the invention is to eliminate or at least minimize the disadvantages of the background art, especially to improve the controllability of the locking and unlocking of the support foot in combination with suitable distribution of clamping forces and guaranteed clamping of the support foot on the construction profile.

### Principle of the invention

The object of the invention is achieved by a support foot with the features of appended claim 1 for connecting the mounting frame of a sanitary appliance to a construction profile of a construction system for dry construction, whose principle consists in that a locking tooth is provided with an oblique locking wall, which, in the locked position of a locking lever, is situated against one side wall of a longitudinal groove in a base, this side wall being either oblique or provided with at least one oblique projection, wherein the gap between the oblique locking wall of the locking tooth and said opposite oblique side wall or the oblique projection in the locked position of the locking lever forms, by its shape and size, a locking space for a dovetail projection on the side of the construction profile.

The support foot according to the invention enables easy installation of the mounting frame of a sanitary appliance, e.g., extendable legs of the mounting frame for fixing toilets, wash basins, urinals or bidets, into construction systems for dry construction. The advantage of this solution is stable, solid, simple and quick assembly which requires no special tools. The support foot according to the invention is easy to manufacture and use, it is light-weight and space-saving.

Further advantages are apparent from the following description and from dependent patent claims.

### Description of drawings

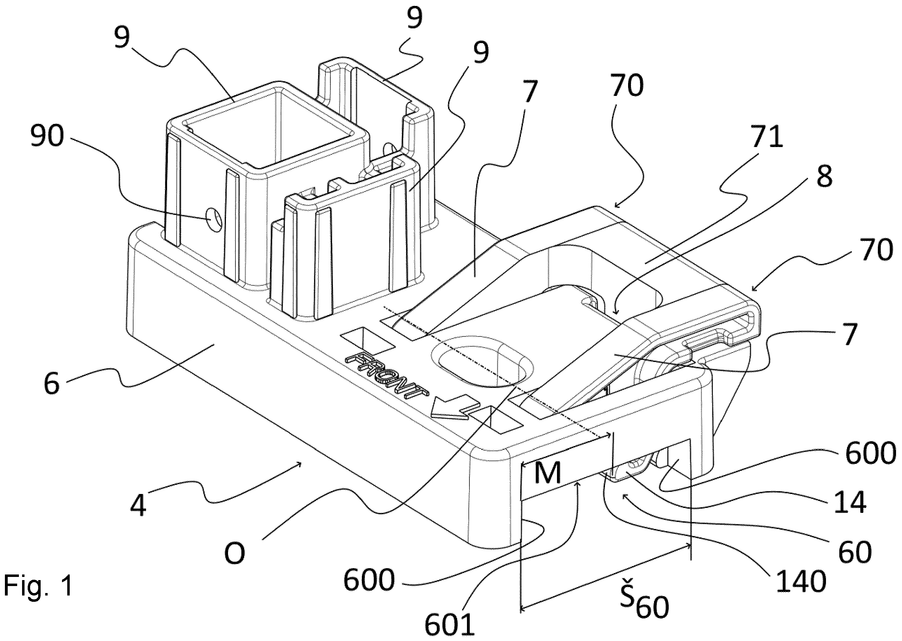

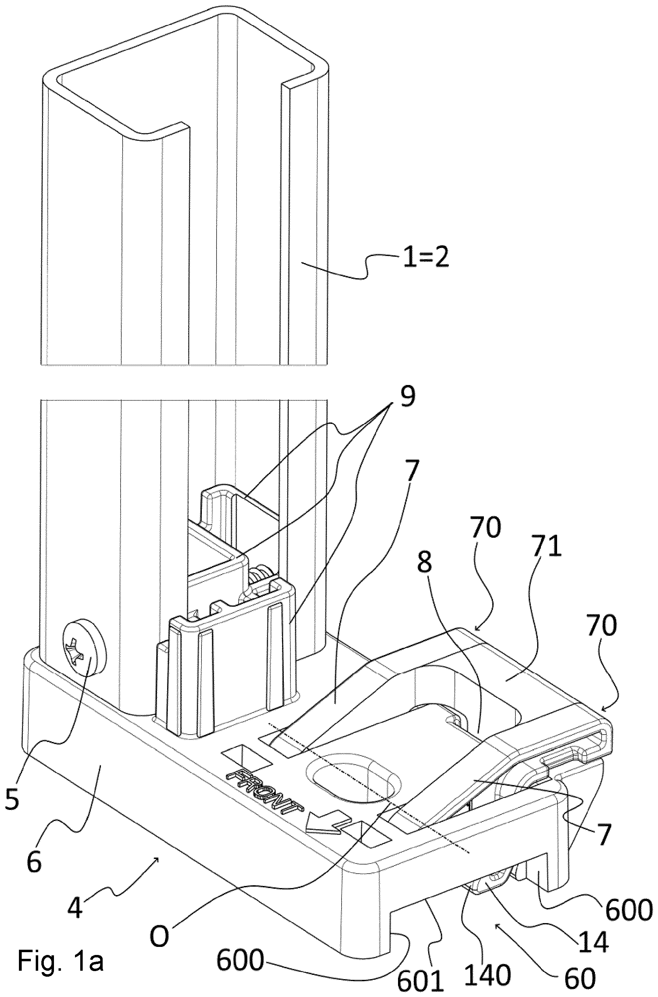

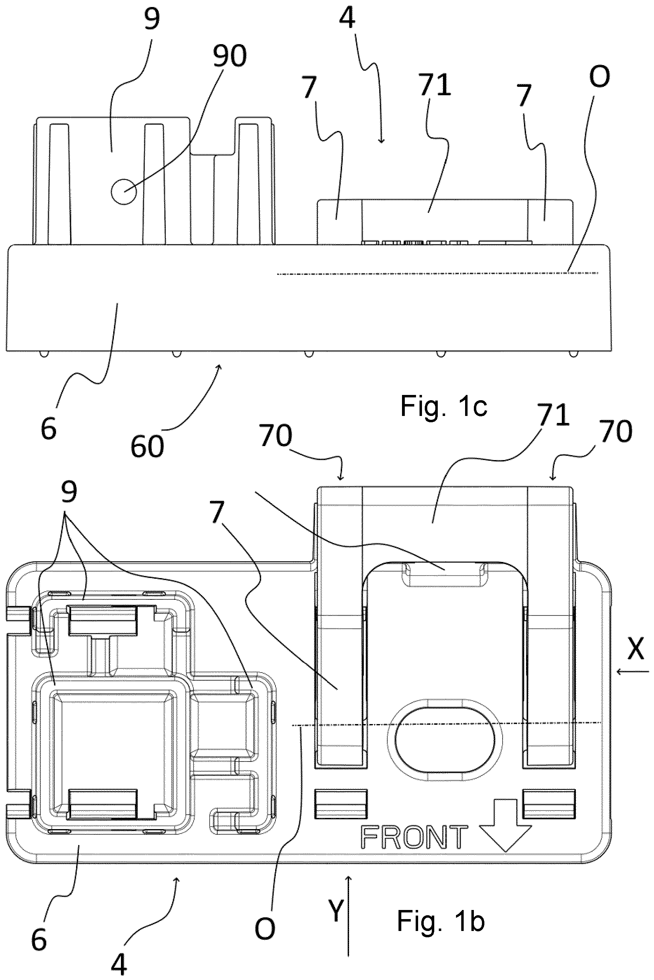

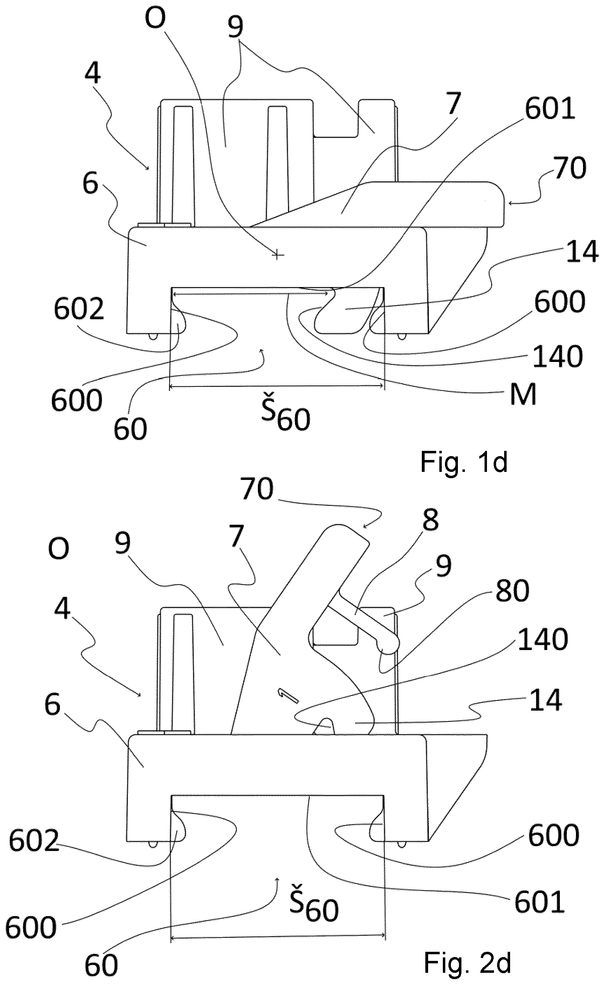

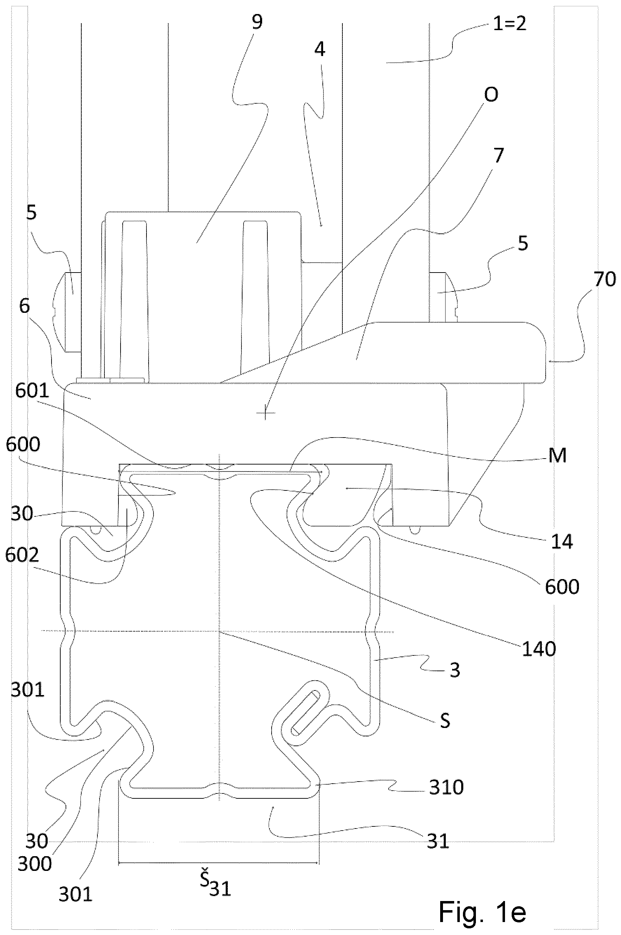

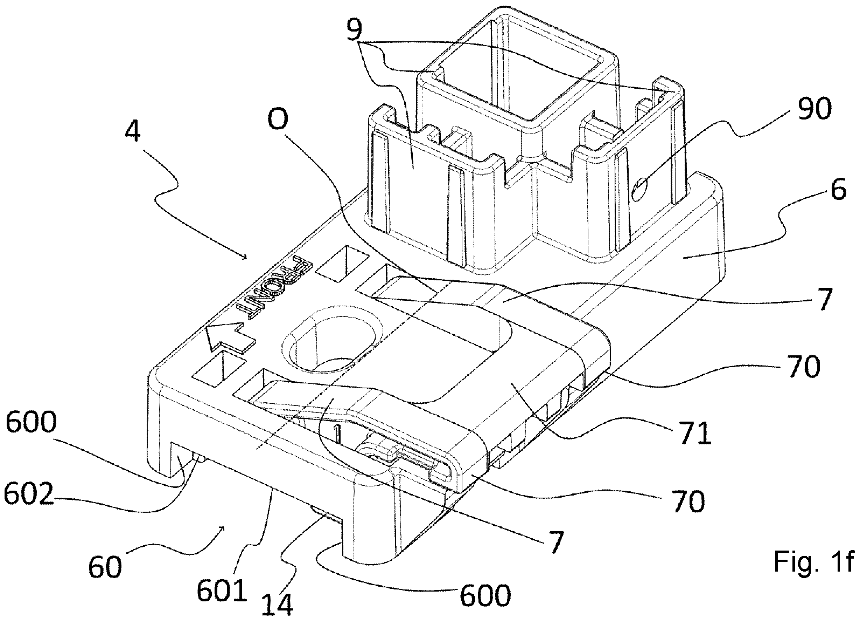

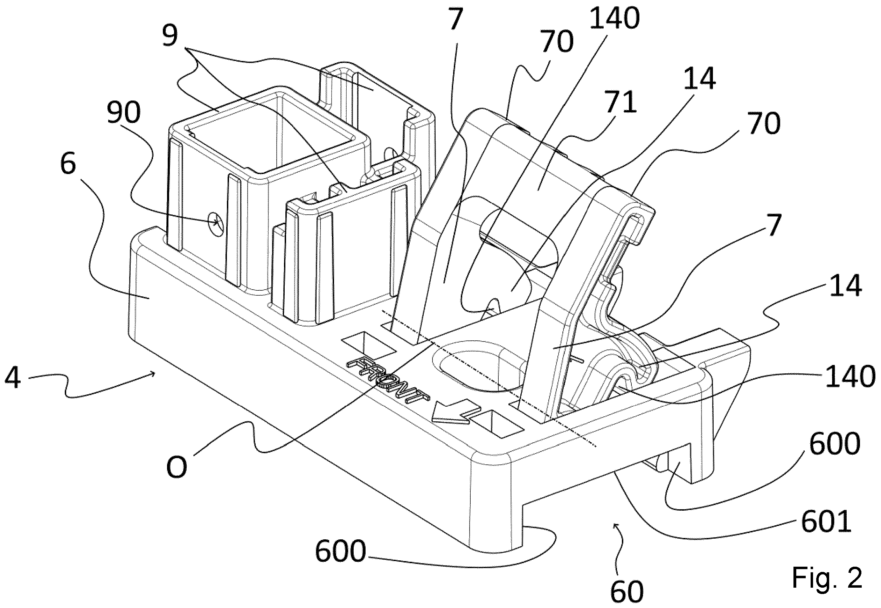

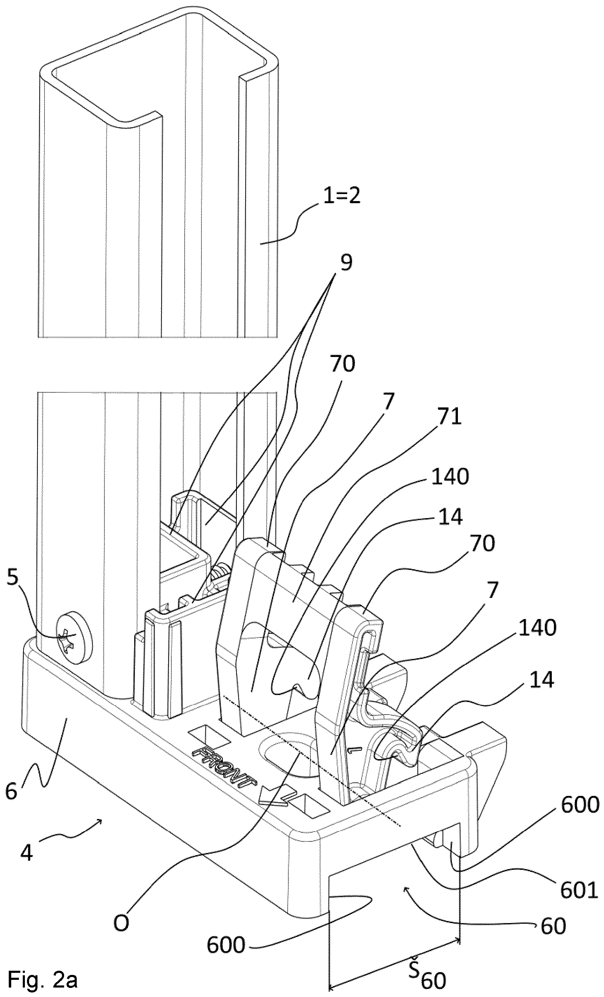

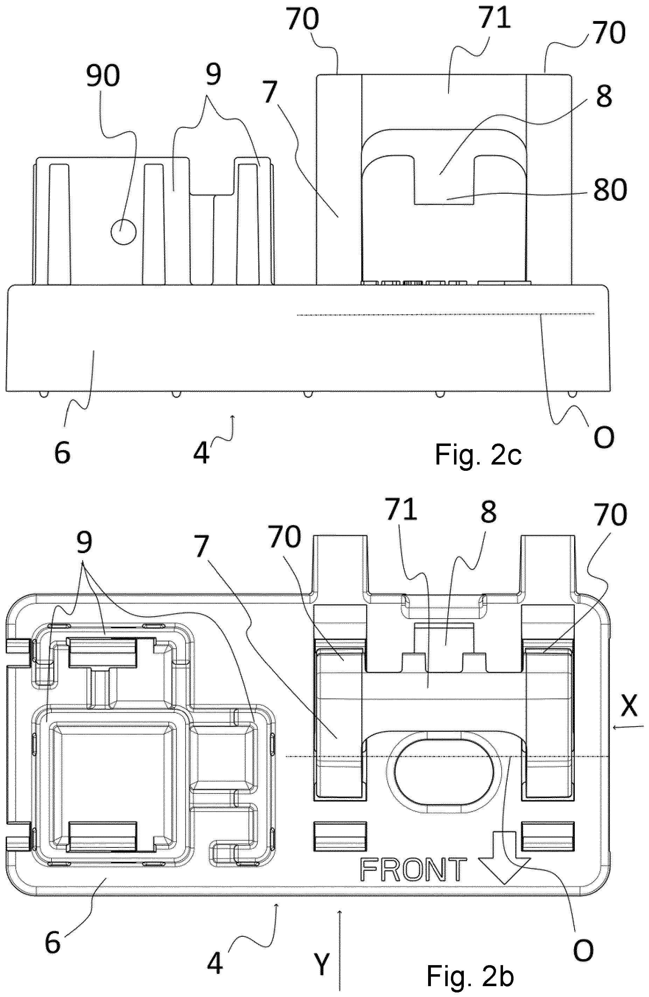

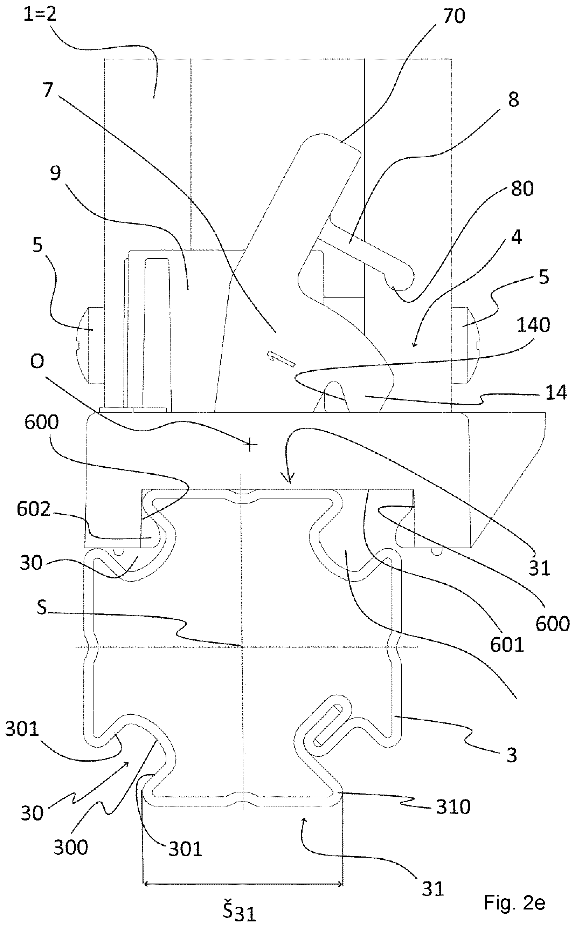

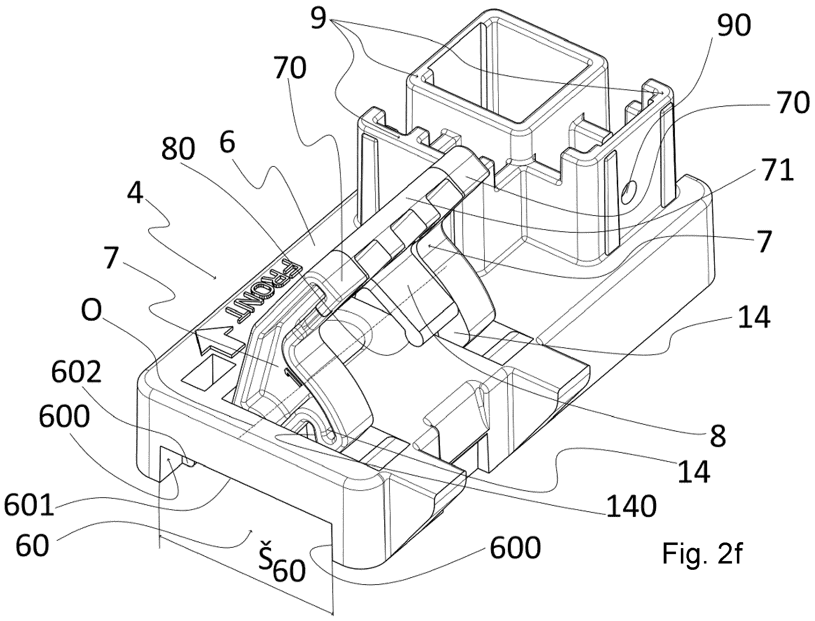

The invention is schematically represented in a drawing, wherein Fig. 1 shows a support foot according to the invention with a locking lever in a locked position, Fig. 1a shows the support foot according to Fig. 1 with a strut attached to the mounting frame, Fig. 1b shows a plan view of the support foot according to Fig. 1, Fig. 1c shows a side view of the support foot according to Fig. 1 as viewed in the direction of the arrow Y in Fig. 1b, Fig.1d shows a side view of the support foot according to Fig. 1 as viewed in the direction of the arrow X in Fig. 1b, Fig. 1e shows the support foot according to Fig. 1 installed on the construction profile of a construction system for dry construction and with the attached strut of the mounting frame, Fig. 1f represents a 3D view of the support foot according to Fig. 1 taken from the opposite side, Fig. 2 shows a support foot according to the invention with the locking lever in the locked position, Fig. 2a shows the support foot according to Fig. 2 with the attached strut of the mounting frame, Fig. 2b shows a plan view of the support foot according to Fig. 2, Fig. 2c represents a side view of the support foot according to Fig. 2 as viewed in the direction of the arrow Y in Fig. 2b, Fig. 2d shows a side view of the support foot according to Fig. 2 as viewed in the direction of the arrow X in Fig. 2b, Fig. 2e shows the support foot according to Fig. 2 installed on the construction profile of a dry construction system and with the attached strut of the mounting frame and finally, Fig. 2f represents a 3D view of the support foot according to Fig. 2 taken from the opposite side.

### Examples of embodiment

The invention will be described with reference to an exemplary embodiment of a support foot for connecting the mounting frame of a sanitary appliance to a construction profile for dry construction shown in Figs. 1 to 2f. The construction profile 3 has a substantially square cross-section with corners rounded and pressed in the form of longitudinal depressions 30 towards the centre of the profile 3 with a bottom 300 and side walls 301, so that the lateral sides 31 of this profile 3 substantially form a dovetail projection 310 which extends in the direction away from the centre S of the profile 3 towards the outer edge of the profile 3 and the above-mentioned dovetail projection 310 comprises oblique side walls 301.

The support foot 4 comprises a base 6, here, for example, formed by a casting of non-ferrous metals, such as zinc or aluminium, etc.

Arranged on the upper side of the base 6 is a sliding element 9 to be slid on the connected end of the beam 2 of the mounting frame 1 of the sanitary appliance. The sliding element 9 comprises at least one hole 90 for a fixing screw 5 or rivet to attach the connected end of the beam 2 of the mounting frame 1 of the sanitary appliance to the support foot 4.

Preferably, the base 6 is formed longitudinal in the direction of the construction profile 3 for which it is designed, wherein the sliding element 9 is arranged on one part of the length of the base 6, whereas on the other part of the length of the base 6 is arranged at least one locking lever 7, which is described below.

On its lower side, the base 6 is provided with a longitudinal groove 60 to attach the support foot 4 to the lateral side 31 of the construction profile 3, to whose dovetail projection 310 the support foot 4 is to be fixed. The width S₆₀ of the longitudinal groove 60, i.e., the distance of the opposing side walls 600 of the longitudinal groove 60, is greater than or equal to the width S₃₁₀ of the dovetail projection 310 on the lateral side 31 of the construction profile 3, to which the support foot 4 is to be fixed.

To improve the abutment of side walls 600 on the oblique support side wall of the dovetail projection 310 of the lateral side 31 of the construction profile 3, to which the support foot is to be fixed, at least one side wall 600 of the longitudinal groove 60 is provided along its length with at least one oblique projection 602, whose distance from the opposite side wall 600 gradually reduces in the direction away from the bottom 601 of the longitudinal groove 60 towards the lower side of the base 6. In another exemplary embodiment, at least one side wall 600 of the longitudinal groove 60 is along its length provided with at least two oblique projections 602, whose distance from the opposite side wall 600 gradually reduces in the direction away from the bottom 601 of the longitudinal groove 60 towards to lower side of the base 6. In another exemplary embodiment, the entire at least one side wall 600 of the longitudinal groove 60 is formed as an oblique wall, whose distance from the opposite side wall 600 gradually reduces in the direction away from the bottom 601 of the longitudinal groove 60 towards the lower side of the base 6.

The above-mentioned locking lever 7 is at one end mounted rotatably on the base 6 about the axis O which is parallel to the longitudinal axis of the base 6 and which is at the same time transverse to the longitudinal axis of the locking lever 7. The locking lever 7 is preferably rotatably mounted on the base 6 in the area of one side of the base 6, and the side is provided with an oblique side wall 600 or is provided with oblique projections 602, wherein the locking lever 7 is situated with its length transversely to the longitudinal axis of the base 6. The locking lever 7 is thus rotatable between its unlocked position, see Figs. 2 to 2f, in which the free end 70 of the locking lever 7 is spaced from the base 6, and its locked position, see Figs. 1 to 1f, in which the free end 70 of the locking lever 7 substantially adjoins the base 6, or in which the free end 70 of the locking lever 7 is situated in the vicinity of the base 6.

On its lower side, the locking lever 7 is provided with at least one locking tooth 14 with an oblique locking wall 140, wherein the locking tooth 14 is in the locked position of the locking lever 7 situated at the level of the side walls 600 of the longitudinal groove 60 in the base 6 and, at the same time, in this position of the locking lever 7 the oblique locking wall 140 of the locking tooth 14 is situated opposite this side wall 600 of the longitudinal groove 60 in the base 6, which is provided with an oblique side wall 600 or is provided with oblique projections 602, wherein the size and shape of the gap M between the oblique locking wall 140 of the locking tooth 14 and the opposite oblique side wall 600 or oblique projections of the longitudinal groove 60 in the base 6 in the locked position of the locking lever 7 correspond to the size and shape of the dovetail projection 310 on the lateral side 31 of the construction profile 3, to which the support foot 4 is to be fixed.

In an illustrated example of embodiment, a pair of parallel locking levers 7 is mounted on the base 6. So as to simplify control, strengthen and improve function, the parallel locking levers 7 are interconnected by a connecting rib 71 at their free ends 70. In an unillustrated example of embodiment, one locking lever 7 is mounted on the base 6. In another unillustrated embodiment, a group of more than two parallel locking levers 7 is mounted on the base 6.

In an illustrated example of embodiment, the locking lever 7 in the area of its free end 70, or, more precisely, in the area of the connecting rib 71 of the free ends 70 of the locking levers 7, is provided with a resilient lock 8 with a securing tooth 80, which, in the locked position of the locking lever 7, resiliently abuts the respective recess in the base 6.

The support foot 1 according to the present invention works in such a manner that the locking lever 7 is in its locked position, the support foot is inserted by means of the sliding element 9 into the connected end of the beam 2 of the mounting frame 1 of the sanitary appliance and by means of the longitudinal groove 60 on the lower side of the base 6, the support foot 1 is slid on the respective lateral side 31 of the construction profile 3, i.e., on the dovetail projection 310 on this lateral side 31 of the construction profile 3. By moving in the direction of the length of the construction profile 3, the position of the mounting frame 1 of the sanitary appliance with the slid on support feet 1 along the length of the construction profile 3 is set, and subsequently the locking lever 7 or the locking levers 7 are rotated to their locked position, whereby the locking wall 140 of the locking tooth 14 on the locking lever 7 gradually passes over the longitudinal edge of the dovetail projection and presses the opposite side wall 600 of the longitudinal groove 60 in the base 6 against the other side wall of the dovetail projection 310. In the locked position of the locking lever 7, the locking wall 140 of the locking tooth 14 is situated substantially over the entire width of the adjacent side wall of the dovetail projection 310, whereby the opposite side wall 600 of the longitudinal groove 60 in the base 6, or any oblique projections 12 on this opposite side wall 600 of the longitudinal groove 60 in the base 6, abut the other side wall of the dovetail projection 310. Furthermore, in the locked position of the locking lever 7, the resilient lock 8 with the securing tooth 80 abuts the respective recess in the base 6 and thus secures the locking lever 7 against unintentional release. Thus, the support foot 1 is attached to the construction profile 3 and subsequently, the end of the beam 2 of the mounting frame 1 of the sanitary appliance to be connected is only fixed on the sliding element 9 by means of fixing screws 5 or rivets.

### Industrial applicability

The invention can be used for fixing the mounting frames of sanitary appliances (toilets, wash basins, urinals or bidets) into constructions created by dry construction technologies.

### List of references

- 1: mounting frame
- 14: locking tooth
- 140: locking wall
- 2: beam
- 3: construction profile
- 30: longitudinal depression of the construction profile
- 300: bottom of the longitudinal depression of the construction profile
- 301: the side wall of the longitudinal depression of the construction profile
- 31: side wall of the construction profile
- 310: dovetail projection
- 4: support foot
- 5: fixing screw
- 6: base
- 60: longitudinal groove
- 600: side wall of the longitudinal groove
- 601: bottom of the longitudinal groove
- 602: oblique projection
- 7: locking lever
- 70: free end of the locking lever
- 71: connecting rib
- 8: resilient lock
- 80: securing tooth
- 9: sliding element
- 90: hole
- M: gap
- O: axis of rotation of the locking lever
- S: centre of the construction profile
- S₃₁: width of the dovetail projection
- S₆₀: width of the longitudinal groove

## Claims

1. A support foot (4) for connecting a mounting frame (1) of a sanitary device to a construction profile (3) of a construction system for dry construction, wherein the support foot (4) comprises a longitudinal base (6) which is on its upper side provided with a sliding element (9) to be slid on an end of a beam (2) of the mounting frame (1) of the sanitary device to be connected, wherein the longitudinal base (6) is on its lower side provided with a longitudinal groove (60) to attach the support foot (4) on the dove-tail shaped lateral side (31) of the construction profile (3), wherein the longitudinal groove (60) is provided with a pair of opposing side walls (600), wherein a locking lever (7) is mounted at its one end rotatably about the axis (O), whereby the axis (O) of rotation of the locking lever (7) is parallel to the longitudinal axis of the longitudinal base (6) and, at the same time, the axis (O) of rotation of the locking lever (7) is transverse to the longitudinal axis of the locking lever (7), the locking lever (7) is on its lower side provided with a locking tooth (14) with a locking wall, the locking lever (7) being rotatable between its unlocked position and its locked position, the locking tooth (14) being situated in the locked position of the locking lever (7) at the level of side walls (600) of the longitudinal groove (60) in the base wherein the locking tooth (14) is provided with an oblique locking wall (140), which is in the locked position of the locking lever (7) situated opposite one side wall (600) of the longitudinal groove (60) in the base (6) and the side wall (600) is either oblique or is provided with at least one oblique projection (602), wherein the gap (M) between the oblique locking wall (140) of the locking tooth (14) and said opposite oblique side wall (600) or the oblique projection (602) in the locked position of the locking lever (7) forms, by its shape and size, a locking space for a dovetail projection (310) on the lateral side (31) of the construction profile (3).

2. The support foot according to claim 1, **characterized in that** the locking lever (7) is rotatably mounted on the base (6) in the area of one side of the base (6) that is provided with an oblique side wall (600) or is provided with at least one oblique projection (602).

3. The support foot according to claim 1 or 2, **characterized in that** at least two parallel locking levers (7) are mounted on the base (6).

4. The support foot according to claim 3, **characterized in that** the parallel locking levers (7) are interconnected by a connecting rib (71) at their free ends (70).

5. The support foot according to any of claims 1 to 4, **characterized in that** the locking lever (7) is provided with a resilient lock (8) with a securing tooth (80), which, in the locked position of the locking lever (7), resiliently abuts the recess in the base (6).

6. The support foot according to any of claims 1 to 5, **characterized in that,** the base (6) is provided with at least one hole (90) in the area of the sliding element for fixation to the mounting frame (2) of the sanitary appliance.

7. The support foot according to any of claims 1 to 6, **characterized in that** the base (6) is formed by a non-ferrous metal casting.

8. The support foot according to any of claims 1 to 7, **characterized in that** the locking lever (7) is made of plastic.

## Patentansprüche

1. Stützfuß (4) zum Anschluss eines Montagerahmens (1) einer Sanitäreinrichtung an ein Bauprofil (3) eines Konstruktionssystems für Trockenbau, wo der Stützfuß (4) eine Längsgrundkörper (6) aufweist, die an ihrer oberen Seite ein Schubelement (9) zum drängendes anzuschließenden Endes des Trägers (2) des Montagerahmens (1) der Sanitäreinrichtung aufweist, wobei die Längsgrundkörper (6) an ihrer unteren Seite eine Längsnut (60) zum Liegen des Stützfußes (4) auf eine schwalbenschwanzseite (31) des Bauprofils (3) aufweist, wo die Längsnut (60) ein Paar gegenüberliegender Seitenwände (600) aufweist, wobei an der Längsgrundkörper ein Verriegelungshebel (7) mit einem seiner Enden um die Achse (O) drehbar gelagert ist, wobei die Drehachse (O) des Verriegelungshebels (7) zur Längsachse der Längsgrundkörper (6) parallel laufend verläuft und die Drehachse (O) des Verriegelungshebels (7) gleichzeitig quer zur Längsachse des Verriegelungshebels (7) liegt, der Verriegelungshebel (7) weist an seiner unteren Seite einen Verriegelungszahn (14) mit einer Verriegelungswand auf, wobei der Verriegelungshebel (7) zwischen seiner entriegelten Stellung und seiner verriegelten Stellung drehbar ist, wo der Verriegelungszahn (14) in der verriegelten Stellung des Verriegelungshebels (7) auf dem Niveau der Seitenwände (600) der Längsnut (60) in der Längsgrundkörper (6) liegt, wo der Verriegelungszahn (14) eine schräge Verriegelungswand (140) aufweist, die in der verriegelten Stellung des Verriegelungshebels (7) gegen eine Seitenwand (600) der Längsnut (60) in der Längsgrundkörper (6) situiert ist und diese Seitenwand (600) entweder schräg ist oder mindestens einen schrägen Vorsprung (602) aufweist, wobei der Spalt (M) zwischen der schrägen Verriegelungswand (140) des Verriegelungszahns (14) und der erwähnten gegenüberliegenden schrägen Seitenwand (600) oder dem schrägen Vorsprung (602) in der verriegelten Stellung des Verriegelungshebels (7) aufgrund seiner Form und Größe einen Verriegelungsraum für den schwalbenschwanzförmigen Vorsprung (310) auf der Seite (31) des Bauprofils (3) bildet.

2. Stützfuß nach dem Anspruch 1, **dadurch gekennzeichnet, dass** der Verriegelungshebel (7) auf der Grundebene (6) im Bereich einer Seite der Längsgrundkörper (6) drehbar gelagert ist, die eine schräge Seitenwand (600) oder mindestens einen schrägen Vorsprung (602) aufweist.

3. Stützfuß nach dem Anspruch 1 oder 2, **dadurch gekennzeichnet, dass** auf der Längsgrundkörper (6) mindestens zwei parallel laufende Verriegelungshebel (7) gelagert sind.

4. Stützfuß nach dem Anspruch 3, **dadurch gekennzeichnet, dass** die parallel laufenden Verriegelungshebel (7) an ihren freien Enden (70) durch eine Verbindungsrippe (71) verbunden sind.

5. Stützfuß nach einem der Ansprüche 1 bis 4, **dadurch gekennzeichnet, dass** der Verriegelungshebel (7) eine elastische Sicherung (8) mit einem Sicherungszahn (80) aufweist, der in der verriegelten Stellung des Verriegelungshebels (7) in eine Vertiefung in der Grundebene (6) elastisch aufsetzt.

6. Stützfuß nach einem der Ansprüche 1 bis 5, **dadurch gekennzeichnet, dass** die Längsgrundkörper (6) im Bereich des Schubelementes mindestens eine Öffnung (90) zur Fixierung an den Montagerahmen (2) der Sanitäreinrichtung aufweist.

7. Stützfuß nach einem der Ansprüche 1 bis 6, **dadurch gekennzeichnet, dass** die Längsgrundkörper (6) aus einem Gussstück aus einem Nichteisenmetall besteht.

8. Stützfuß nach einem der Ansprüche 1 bis 7, **dadurch gekennzeichnet, dass** der Verriegelungshebel (7) aus einem Kunststoff besteht.

## Revendications

1. Pied de support (4) pour connecter le cadre de montage (1) d'installation sanitaire (1) au profilé de construction (3) d'un système de construction sèche, où le pied de support (4) comprend une base longitudinale (6), qui est pourvue sur sa face supérieure d'un élément coulissant (9) pour faire passer l'extrémité de la poutre (2) du cadre de montage (1) de l'installation sanitaire (1) qui doit être connectée, tandis que la base longitudinale (6) est pourvue sur sa face inférieure d'une rainure longitudinale (60) pour apposer la base de support (4) à la face en forme de queue d'aronde (31) du profilé de construction (3), où la rainure longitudinale (60) est pourvue d'une paire de parois latérales opposées (600), tandis qu'une des extrémités du levier de verrouillage (7) pivote autour de l'axe (O), tandis que l'axe (O) de rotation du levier de verrouillage (7) est parallèle à l'axe longitudinal de la base longitudinale (6) et en même temps l'axe (O) de rotation du levier de verrouillage (7) est transversal à l'axe longitudinal du levier de verrouillage (7) ; le levier de verrouillage (7) est pourvu sur sa face inférieure d'une came de verrouillage (14) avec une paroi de verrouillage, tandis que le levier de verrouillage (7) peut pivoter entre sa position déverrouillée et sa position verrouillée où la came de verrouillage (14) est située dans la position verrouillée du levier de verrouillage (7) au niveau des parois latérales (600) de la rainure longitudinale (60) dans la base (6), où la came de verrouillage (14) est pourvue d'une paroi de verrouillage inclinée (140), qui, en position verrouillée du levier de verrouillage (7), est positionnée contre une paroi latérale (600) de la rainure longitudinale (60) de la base (6) et cette paroi latérale (600) est soit inclinée, soit munie d'au moins une saillie inclinée (602), tandis que l'espace (M) entre la paroi de verrouillage inclinée (140) de la came de verrouillage (14) et ladite paroi latérale inclinée opposée (600) ou la saillie inclinée (602) en position verrouillée du levier de verrouillage (7) forme, par sa forme et sa taille, un espace de verrouillage pour la saillie en queue d'aronde (310) sur le côté (31) du profilé de construction (3).

2. Pied de support selon la revendication 1, **caractérisé en ce que** le levier de verrouillage (7) est disposé sur la base (6) de manière pivotante dans une zone d'un côté de la base (6), qui est pourvue d'une paroi latérale inclinée (600) ou d'au moins une saillie inclinée (602).

3. Pied de support selon la revendication 1 ou 2, **caractérisé en ce qu'**au moins deux leviers de verrouillage parallèles (7) sont montés sur la base (6).

4. Pied de support selon la revendication 3, **caractérisé en ce que** les leviers de verrouillage parallèles (7) sont reliés à leurs extrémités libres (70) par une nervure de raccordement (71).

5. Pied de support selon l'une des revendications de 1 à 4, **caractérisé en ce que** le levier de verrouillage (7) est muni d'un verrou souple (8) avec une came de verrouillage (80) qui s'engage de manière souple dans le creux de la base (6) avec le levier de verrouillage (7) en position verrouillée.

6. Pied de support selon l'une des revendications de 1 à 5, **caractérisé en ce que** la base (6) est pourvue d'au moins une ouverture (90) dans la zone de l'élément coulissant qui permet sa fixation au cadre de montage (2) de l'installation sanitaire.

7. Pied de support selon l'une des revendications de 1 à 6, **caractérisé en ce que** la base (6) est formée par une pièce coulée en métal non ferreux.

8. Pied de support selon l'une des revendications de 1 à 7, **caractérisé en ce que** le levier de verrouillage (7) est en plastique.
